# EUROPEAN PATENT APPLICATION

(11) **EP 0 613 298 A2**
(43) Date of publication of application: **31.08.1994**
(21) Application number: 93310480.4
(22) Date of filing: 23.12.1993
(51) Int. Cl.: H04N 5/93

(54) **Video playback device with multiple access**

(30) Priority: 31.12.1992 US 999044
(71) Applicant: GTE LABORATORIES INCORPORATED, Wilmington Delaware 01901 (US)
(72) Inventor: Mustafa, Mehmet, Waltham, MA 02154 (US)
(74) Representative: Bubb, Antony John Allen

(57) **Abstract**

s7 An electronic video record and playback assembly (11) operates in a recording mode to store input material in a solid state memory unit (12), and operates in a playback mode to reproduce the prerecorded material in response to user playback requests. The assembly (11) in- dudes direct memory access (DMA) devices which serve as the interface (14) to the memory unit (12), and a signal compressor (17) for reducing the input material for digital storage. The assembly (11) is capable of accommodating multiple playback requests via the DMA devices such that plural reproduction of shared material may be viewed simultaneously.

## Description

The present invention relates to video distribution systems and, more particularly, to an assembly for recording video programming material and reproducing the recorded material on multiple output channels in response to access requests.

Conventional video record playback (VRP) devices refer generally to electro-mechanical, magnetic, and optical media assemblies and include, for example, video cassette recorders (VCR), video cassette players (VCP) with magnetic media, laser disk players (LDP), and write-once-read-many (WORM) optical media devices.

Each of the above devices suffers from an inability to provide more than a single output. In WORM and LDP devices, there is a playback 'head' on each side of the platter, with the design emphasis focusing on providing non-interrupted or minimally interrupted video. In these devices, however, there is no means to share the media at random. Additionally, in VOD and NVOD experimental systems, a number of VCR or VCP devices are used with the same video material. In the VOD systems, the players are assigned to the subscribers on a first-come-first-serve basis, while in the NVOD systems a number of VCP or VCR devices are playing simultaneously, with each having been started at a fixed time interval (typically 15-30 minutes) apart from the others.

As a further disadvantage of conventional VRP devices, video quality in all but very expensive professional reproduction equipment is at best mediocre. For example, the reproduced video quality in magnetic media type [90-3-888 EP] equipment deteriorates rapidly with use. In NVOD systems, the magnetic cartridges are changed at least once per week, and the VCR/VCP assemblies are always powered and in the PLAY mode in order to improve the response time during reproduction or playback phase. However, the heat developed in such continuously powered equipment accelerates the degradation of the quality of the video reproduced from the magnetic media.

The aforementioned devices are also subject to reliability problems since, as they are electro-mechanical assemblies, the equipment is characterized by alignment problems. In particular, misaligned or slightly misaligned equipment can provide unacceptable or marginally acceptable video.

Moreover, the video effects in the listed devices lack quality. For example, in PAUSE, SCAN, or FAST FORWARD modes of VCR and VCP devices, the noise is a well known artifact of the technology. Only the optical media devices provide quality freeze frame or STILL video.

A particular disadvantage of the conventional VRP devices is the relatively long access times during operation, even with optical media equipment. In VOD library systems utilizing robotic media loading and unloading, the best times are of the order of 30-40 seconds. Depending upon the media, random access to any portion of the media may be time consuming. For example, optical class equipment exhibit seek times on the order of a few seconds, while the access time of magnetic media class equipment is even greater due to the serial nature of the medium.

Finally, each of the above-noted devices (except for mass-produced laser disks) exhibits a lengthy copying time when the equipment attempts to replicate recorded material. Typically, the duration of such replication will be equivalent to the normal duration of the material in the medium. For example, a 90-minute movie will take at best 90 minutes to copy onto another tape or cartridge.

In one aspect of the present invention, a system for distributing information, comprises a memory means for storing input information, a control means responsive to a user request for issuing a control signal, and an output means for receiving and distributing an output signal. An interface means coupled to said control means and said output means accesses said memory means in accordance with the control signal, and transfers stored information being accessed to said output means as the output signal.

In another aspect of the present invention, the interface means includes a plurality of direct memory access (DMA) devices, and the memory means includes a solid state random access memory (RAM).

In the drawings:
Figure 1 is a block diagram of a video record and playback assembly in accordance with the present invention;
Figure 2 further details the assembly in Figure 1;
Figure 3 diagrammatically illustrates an implementation of the Figure 2 assembly in a video-on-demand application; and
Figure 4 shows another embodiment of the present invention.

The present invention relates to an assembly for recording and reproducing information, preferably video material, and includes a means for directly accessing a memory area such that requests for plural and independent reproductions of material can be accommodated simultaneously. The recordation and reproduction involve intermediate signal processing techniques including analog-digital and digital-analog conversions, and data compression/decompression.

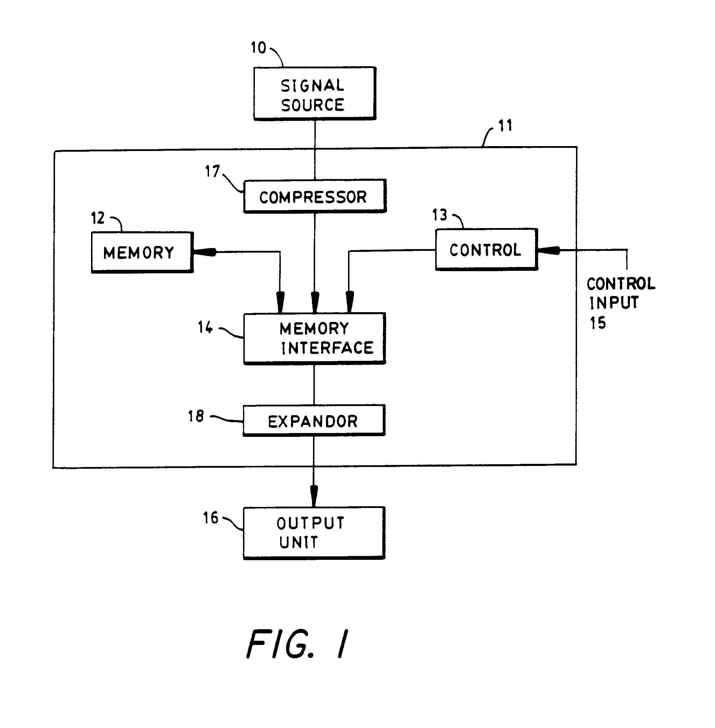

Figure 1 illustrates in block diagram format a signal distribution system utilizing an electronic video record and playback (EVRP) assembly according to the present invention. A signal source 10 transmits information to the EVRP assembly 11 for recording and reproduction. The information may include data, audio, or video material or any combination thereof. It should be obvious to those skilled in the art that source 10 may generate a signal in any format, such as baseband or modulated. The EVRP assembly 11 includes a memory unit 12, control unit 13, and memory interface 14 functioning cooperatively to operate in either a recording or playback mode in response to a request signal on control input 15. The memory unit 12 is preferably a solid state RAM storage facility.

The EVRP assembly further includes a compressor unit 17 which reduces the input signal for digital storage, and an expandor unit 18 which expands the compressed representation of the signal. The compression enables the EVRP assembly to process and store high bandwidth input signals, and renders the assembly capable of distributing information to a plurality of output channels. Otherwise, if the full bandwidth of the input signal is processed by and stored in assembly 11, the output capability would be limited to a single channel.

In general, the EVRP assembly 11 is activated into its two operating modes, namely the recording and playback modes, under the direction of control unit 13. The control unit 13 interfaces to an external computer means via connection(s) 15, and to interface 14 via appropriate connection means well known to those skilled in the art. During operation, control unit 13 is responsive to request signals on lines 15, and issues the necessary control information for engaging the appropriate units into operation.

In the recording mode, input signals received from source 10 are compressed and then stored in a suitable format in memory unit 12. In the playback mode, prerecorded material from memory 12 is accessed directly by memory interface 14 and transferred to the output unit 16 via expandor unit 18 for decompression and ultimate distribution. The playback mode is initiated by a request signal on control input 15 which activates control unit 13 into commanding memory interface 14 to access memory 12 and retrieve prerecorded material from a selected area of memory 12.

The memory interface 14 in the present invention is based on direct memory access (DMA) devices. One such device is the Intel 82380 32-bit DMA controller capable of supporting 50 MBytes/s data transfers, described on pp. 4-171 to 4-197 of the Intel Microprocessor and Peripheral Handbook, Volume 1-Microprocessor (1989).

An advantage of the DMA feature in EVRP assembly 11 is the operational capabi lity of multiple random accesses to the shared material (in memory 12), and simultaneous reproduction of the prerecorded material on multiple output channels. Each channel of the DMA means is independently programmable to designate a portion of memory 12 to be accessed. During playback, a plurality of individual signal expansion devices in expandor unit 18 each requires a segment of data (e.g., byte) at a certain rate. The bandwidth of the DMA means is sufficiently high such that the DMA means can accept multiple playback requests, retrieve the appropriate byte sequences from memory, and transfer the information to the respective signal expansion devices in expandor unit 18 in sufficient time for simultaneous real-time playback on multiple outputs. Thus, although the multiple access requests are accommodated in a prioritized fashion, the end users acquiring the output information from the individual signal expansion devices will perceive simultaneous reproduction of the prerecorded material on the multiple output channels.

It should be obvious to those skilled in the art that the output channels could be playing in any form of time synchronization, not necessarily simultaneous, or totally independent in accordance with the appropriate timing signals from control unit 13. Since the compression reduces the bandwidth requirement (namely, the amount of bytes needed by an individual signal expansion device to maintain real-time playback), the memory accesses during playback are not demanding.

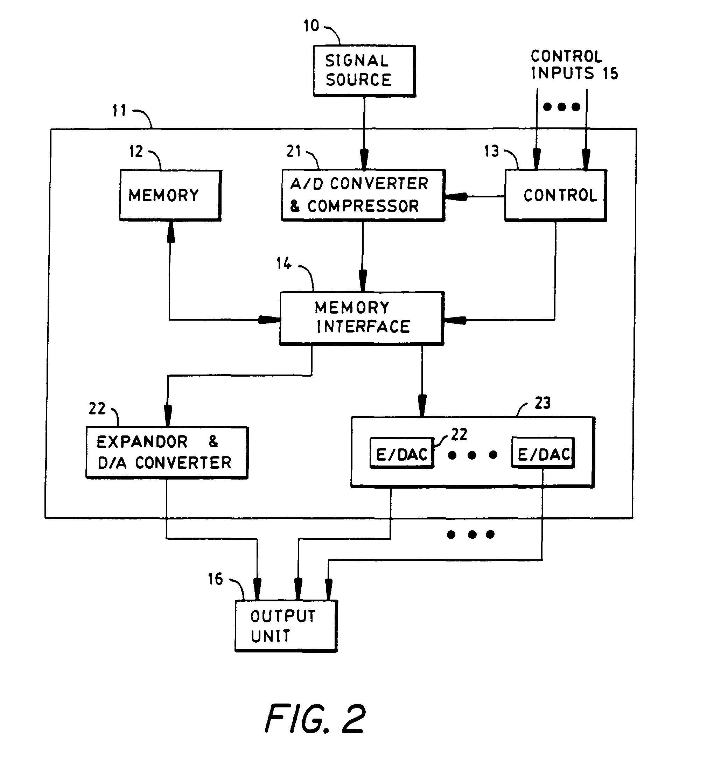

The assembly of Figure 1 is detailed further in the block diagram of Figure 2. Original master video material from source 10 is presented to the EVRP assembly 11 in baseband form. The source may include, for example, a video camera, video cartridge, tape player, or other similar equipment. An Analog-to-Digital (A/D) Converter and Compressor unit 21 (hereinafter ADC/C unit) receives the input video material, digitizes the video, and compresses the digital samples with video codecs in real-time video digitization rates.

By way of illustration and not limitation, an average compression ratio of 128:1 is assumed to demonstrate the storage requirements of EVRP assembly 11. An example of a commercial product capable of supporting this compression ratio is the JPEG-VIPER image compression board with audio available from Dolch Computer Systems, Inc., 372 Turquoise Street, Milpitas, CA95035. Furthermore, a movie duration of 90 minutes is assumed. For a typical digitization rate of 14.32 MHz, namely four times the color subcarrier frequency, there will be 910 samples or bytes per line. Accordingly, for a 90-minute full motion video, the uncompressed storage requirement is determined as follows:
Storage = 90 min. x 60s/min. x 30 frames/s x 525 lines/frame x 910 bytes/line, = 77396 Mbytes

If the ADC/C unit 21 uses the above-noted compression rate of 128:1, the memory requirement in memory unit 12 reduces to approximately 600 Mbytes. Currently available 4 Mb DRAM SIMM memory modules are adequate storage units for this application, and occupy a physical space of approximately two printed circuit cards of 15"x15". Memory boards could be designed with an on-board battery backup facility to permit portability of the recorded video material. Additionally, with the assumed 128:1 compression factor, a data distribution system capable of supporting 14-50 simultaneous playback devices is possible when a multibyte-wide DMA transfer discipline is used.

During a recording mode, the digitized and compressed output from ADC/C unit 21 is written via memory interface 14 into the storage area of memory 12 without interruption. Although the discussion of Figure 2 concerns the processing of video material from source 10, it should be obvious to those skilled in the art, without departing from the scope of the present invention, that circuitry may be included in EVRP assembly 11 to accommodate the audio portion of a composite video signal. The particular functioning of the EVRP assembly during the recording mode is detailed below.

The recording mode is initiated at the user's request by forwarding the request on control input 15. The control unit 13 is responsive to the request and issues the appropriate control signal to ADC/C unit 21 for executing digitization and compression of the information from source 10. The control unit 13 also initializes the DMA devices in memory interface 14 for recording information in memory unit 12. After this initialization, the A/D converter is triggered to begin the conversion, which concurrently produces DMA requests for accessing memory unit 12 to store therein the digitized and compressed data from ADC/C unit 21. If the signal source 10 also generates an audio signal in addition to the video signal, a similar initialization procedure in the memory interface 14 and ADC/C unit is executed to record the audio portion.

During a playback mode, a playback request appears on control input 15. The request includes an address sequence defining a storage area of memory unit 12, and a target address identifying a designated signal Expandor and Digital-to-Analog (D/A) Converter unit 22 (hereinafter E/DAC unit) or units 23 which is to receive prerecorded material from memory 12. The control unit 13 responds to this request and directs memory interface 14 to access memory 12 and transfer the accessed information to a designated E/DAC unit.

More particularly, when external playback requests are made via control input(s) 15, control unit 13 initializes the next available DMA device(s) and forces a DMA request on the appropriate channel(s), thereby initiating the playback.

The initialized DMAdevices within memory interface 14 retrieve the information stored within a region defined by the address sequence provided by control 13, and forward the information to an E/DAC unit 22 or a plurality 23 of such E/DAC units. The compressed digital bytes are expanded in real time and converted into an analog representation of the decompressed digital sequence. The D/A converter is clocked at the same rate as the original digitization in unit 21 for full motion reproduction, or may be clocked at slower or faster speeds to facilitate different video effects in accordance with user requests. Additionally, freeze framing or pausing of the video can be accomplished without the presence of unpleasant artifacts which appear in conventional electro-mechanical and magnetic media devices.

The advantages of the present invention are best illustrated when a plurality 23 of E/DAC units is coupled to the interface 14. As noted above, the interface 14 functions as a direct memory access (DMA) means for accessing the storage area in memory 12, and for retrieving the appropriate byte sequences corresponding to information being requested by an E/DAC unit. The memory access and byte retrieval of each E/DAC unit are non-blocking and sequential under the control and supervision of the DMA means in interface 14. In particular, the DMA means is equipped with a plurality of independently programmable channels each coupled to a respective one of the E/DAC units in the plurality 23 of such units. Furthermore, the DMA means has an arbitration scheme which accommodates multiple access requests from the E/DAC units to memory 12. Specifically, the priorities of the access requests from the E/DAC units to the DMA means are organized into a rotating priority which assures equal and non-monopolizing accesses to the shared memory.

In addition to the operational modes noted above for recording and reproducing video material, the EVRP assembly is capable of accommodating other video effects in response to the appropriate user requests. When one such request appears on line 15, control unit 13 assigns the incoming request to one of the playback or reproduction devices (e.g., an E/DAC unit), and reprograms the DMA means and expandor into the correct mode of operation.

For example, the PAUSE function is implemented by continuously playing the same video frame. The expandor is programmed into a loop cycle in which the storage area being accessed in memory means 12 is linearly increased until a sufficient number of bytes have been read out which are expandable into a frame. The expandorwill repeatedly expand only this section of memory corresponding to the accessed byte sequence.

If the PAUSE mode is engaged using a four-field full color NTSC video frame, for example, the number of bytes required by the expandor is approximately 7500. Adesign consideration in executing the PAUSE mode is to temporarily suspend the associated audio channel in order to prevent loss of the audio/video synchronization. Another possible operational mode would be a FAST FORWARD function, in which the memory is accessed at every other frame position to create an apparent video advancement of twice the normal viewing rate. In general, if the memory is accessed at intervals corresponding to every N^{t}h frame position, the picture speed will be enhanced by a factor of N. Systems which implement the above-noted video effects, namely systems characterized by changes to the normal progression of the otherwise synchronized audio and video channels, must silence the audio channel but provide means to appropriately update the audio memory pointers when normal playback is resumed.

The EVRP assembly described above has advantageous application in a near-video-on-demand (NVOD) environment characterized by multiple transmissions of shared material at staggered time intervals from individual VCR units. In a conventional NVOD system playing seven different two-hour movies, for example, each movie utilizes four VCR units each started at a 30-minute time interval, thereby requiring a total of 28 VCR units (4 VCR units/movie x 7 movies).

However, in an NVOD system according to the present invention, the multiple transmission of each movie would only require a single EVRP assembly due to the multiple access capability of a DMAdevice. Accordingly, seven movies would require only seven EVRP assemblies. The staggered transmission of prerecorded video material present in the memory means of an EVRP assembly would be facilitated by programming the DMA means with the appropriate access requests from control unit 13 such that the DMAaccesses occur at the requested staggered time intervals.

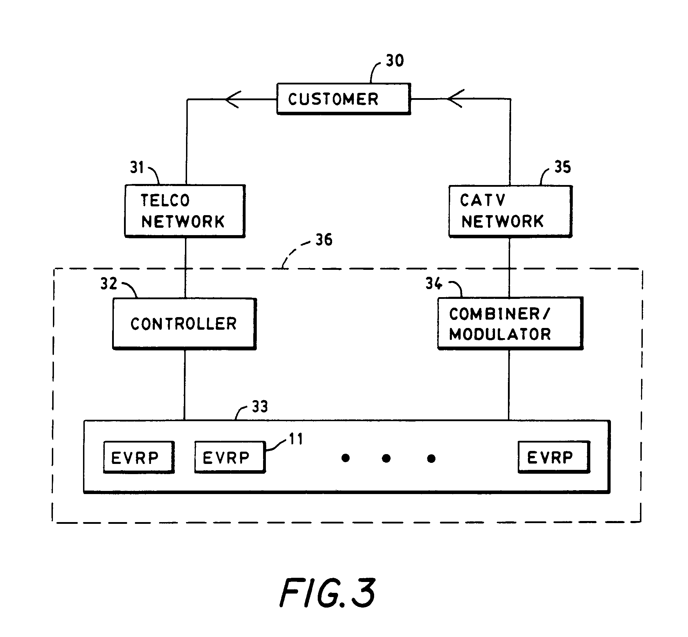

An example of an NVOD system according to the present invention is shown illustratively in Figure 3. A group of customers 30, such as residential users of telephone services, issue viewing requests to central facility 36 via a telephone company (TELCO) network 31 for the reproduction of selected video material. At facility 36, a controller unit 32 (corresponding to control unit 13 in Figures 1 and 2) issues the appropriate signals to a group 33 of EVRP assemblies 11 for accessing and reproducing the necessary material. The accessed material is suitably formatted by a combin- er/modulator unit 34 and forwarded via a cable television (CATV) network 35 to the respective requesting customers 30.

Further applications of the EVRP assembly include the distribution of compressed video information over high-speed lightwave links known as optical information highways. More particularly, if a communications center were configured to include an EVRP assembly, the simultaneous multiple readout capability of the assembly permits the simultaneous distribution of information to a plurality of remote sites. The means for physically distributing the multiple outputs from the EVRP assembly may include optical fiber links and satellite links.

Another application is in the field of interactive video services in which LDP or WORM devices are used to reduce the access time during heavy traffic intervals. In such an application, a single EVRP is used to achieve near instantaneous access time to any portion of the storage media.

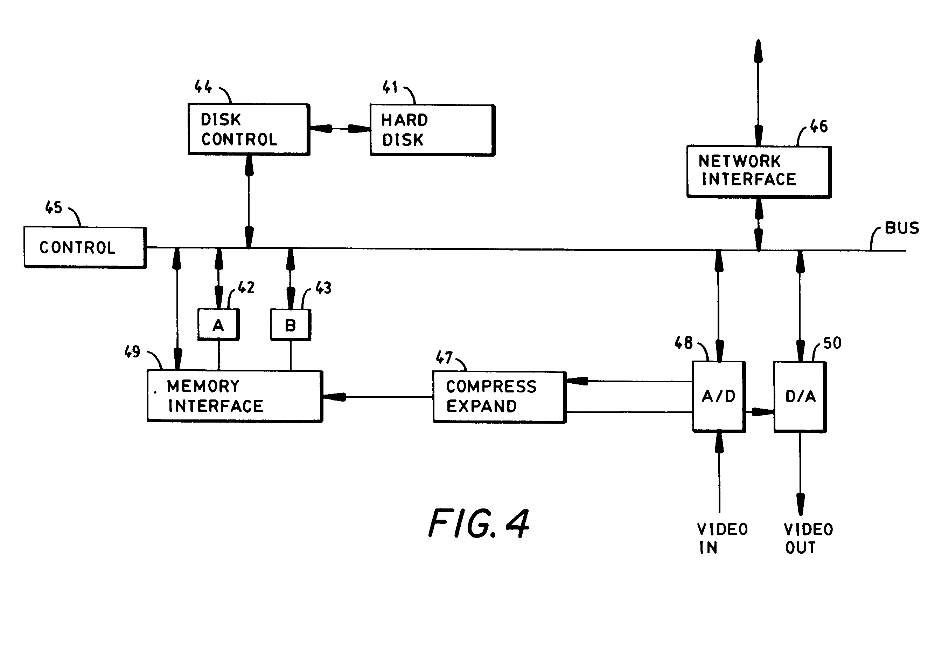

Figure 4 illustrates an alternative embodiment of the present invention that is suitable for applications where high speed magnetic hard disk(s) form the storage media. The system of Figure 4 represents a single readout implementation of the EVRP assembly in Figure 2. In particular, the system uses magnetic storage 41 with typical random access times of 14-16 ms, and two memory blocks 42 and 43. A disk controller unit 44 interfaces with a bus interconnecting the re- mainderof the system, and is specifically responsible for transferring compressed data to and from the high-density disk 41. Commercially available disk controllers and hard-disk media are presently capable of supporting transfer rates of 10-20 megabytes per second.

In the record mode, controller 45 responds to the appropriate request communicated via network interface 46, initializes the compressor section of the compress/expand unit 47, and triggers the A/D converter unit 48 to commence conversion of the VIDEO IN signal. The digitized output of ADC unit 48 is read by the compress/expand unit 47 which compresses the incoming video data at real time speeds and forwards the compressed data to memory interface 49. The interface 49 stores the compressed data in one of the memory units 42 or 43.

When one of the memory units reaches its storage capacity, the memory interface 49 automatically switches the data transfer to the other memory unit. As this second memory unit is being written to by compress/expand unit 47, data from the filled memory unit is being transferred to the hard disk 41 via disk controller 44. Since the data rate out of the compressor is significantly lower than that of byte transfers to disk, the compress/expand unit is guaranteed to have memory available for temporary storage of the compressed data.

In the playback mode, control unit 45 initializes the expandor circuitry of the compress/expand unit and activates the disk controller 44 to commence byte transfers from hard disk 41 to the two memory units 42 and 43. The data temporarily stored in the memory units is forwarded by memory interface 49 to the compress/expand unit for expansion.

The expanded digital output from unit 47 is sent to D/A converter unit 50 which is triggered to convert the output into analog video. The byte transfer from memory units 42 and 43 to compress/expand unit 47 is such that when one of the units is depleted, the memory interface 49 selects the other memory unit for data transfer to unit 47 and concurrently requests the disk controller 44 to transfer stored data from the disk41 to the empty memory unit. As with the recording mode, the byte transfers from hard disk 41 to the memory units are faster than the data rate required by the expandor section of unit 47. Accordingly, there is always data available for expansion in the memory units.

Novel features of the EVRP assembly according to the present invention include multiple simultaneous random access capability, the storage of video in semiconductor memories for archival and distribution, compression of video for storage and distribution, and random access rather than fast forward or reverse sequential access as in VCRs.

The EVRP device is capable of supporting multiple outputs. Each of the outputs in the EVRP device is totally independent from the other outputs. In contrast to presently available video equipment, the EVRP permits totally random multiple accesses to the shared material. This is a welcome feature for the VOD and NVOD applications with significant equipment reduction.

Moreover, absence of magnetic or optical media and the mechanical readout 'heads' makes the EVRP inherently a high quality video device. The degradation associated with repeated usage is absent in the EVRP. Additionally, the EVRP is a non-mechanical device with considerably improved reliability over its mechanical counterparts. Also, since there are no motion and no mobile parts, no periodic cleaning or maintenance is required.

In the EVRP, the special video effects like STILL video, SLOW or FAST scanning are implemented in firmware and do not depend on tracking mechanisms and circuits which are known to produce noisy and scratchy video. For example, the implementation of the STILL frame or PAUSE function requires only the repeated reproduction of a certain portion of the semiconductor memory in a loop. This implementation involves no tracking or phase lock loop circuitry, and therefore is more stable and cleaner than the mechanical counterparts. In the EVRP, accessing any section of the memory is virtually instantaneous. This improves the response times by orders of magnitude. Totally random access implies that searching for certain portions of the video is inherently a faster process. Finally, copying of the compressed video material from the semiconductor memory into another takes place at higher rates than the real-time playout rates in the magnetic or optical devices. In present technology, the copying or reproducing of the media fordistribution is faster in EVRP technology by factors of up to 100-200.

While there has been shown and described what are at present considered the preferred embodiments of the invention, it will be obvious to those skilled in the art that various changes and modifications can be made therein without departing from the scope of the invention as defined by the appended Claims.

## Claims

1. A system for distributing information, comprising:
memory means for storing information;
control means responsive to a user request for issuing a control signal;
output means for receiving an output signal and distributing said output signal; and
interface means coupled to said control means and said output means for accessing information in said memory means in accordance with the control signal, and transferring stored information being accessed to said output means as the output signal.

2. The system as recited in claim 1 wherein said interface means includes:
a plurality of direct memory access (DMA) devices.

3. The system as recited in claim 2 wherein said memory means includes:
a solid state random access memory (RAM).

4. The system as recited in claim 2 further comprising:
A/D signal conversion means for executing an analog to digital conversion of an input analog signal; and
compression means coupled to said signal conversion means for compressing the digital representation of said analog signal, and forwarding the compressed digital representation to said memory means.

5. The system as recited in claim 4 further comprising:
expansion means coupled to said interface means for decompressing signals being transferred by said interface means; and
D/A signal conversion means coupled to said expansion means for executing a digital-to-analog conversion of the decompressed signals, and forwarding the converted signals to said output means as the output signal.

6. The system as recited in claim 5 wherein the output means comprises:
means for modulating the output signal and forwarding the modulated signal to a distribution network.
